# EUROPÄISCHE PATENTSCHRIFT

(11) **EP 2 081 986 B1**
(45) Veröffentlichungstag und Bekanntmachung des Hinweises auf die Patenterteilung: **16.05.2012**
(21) Anmeldenummer: 07846249.6
(22) Anmeldetag: 15.10.2007
(51) Int. Cl.: C08K 3/08, C09D 7/12, C08K 3/00, F16C 33/00, F16C 13/00, F16C 33/14

(54) **VERSCHLEISSSCHUTZBESCHICHTUNG**
WEAR-RESISTANT COATING
REVÊTEMENT ANTI-USURE

(30) Priorität: 13.10.2006 DE 102006049062
(43) Veröffentlichungstag der Anmeldung: 29.07.2009
(73) Patentinhaber: Richter, Dirk, 52349 Düren (DE); Pluta, Christian, 41063 Mönchengladbach (DE)
(72) Erfinder: Richter, Dirk, 52349 Düren (DE); Pluta, Christian, 41063 Mönchengladbach (DE)
(74) Vertreter: Reuther, Martin
(86) Internationale Anmeldenummer: PCT/DE2007/001810
(87) Internationale Veröffentlichungsnummer: WO 2008/043350

(56) Entgegenhaltungen:
- WO-A-02/45955
- DE-A1- 3 534 242
- DE-A1- 4 311 634
- US-A- 4 920 002
- US-A- 5 928 778
- DATABASE WPI Week 198546 Derwent Publications Ltd., London, GB; AN 1985-287218 XP002475908 & JP 60 197770 A (SUMITOMO METAL IND LTD) 7. Oktober 1985 (1985-10-07)

## Beschreibung

Die Erfindung betrifft eine Verschleißschutzbeschichtung, insbesondere für Walzen.

Derartige Verschleißschutzbeschichtungen können auf unterschiedlichste Weise aufgebaut sein. So können diese beispielsweise rein keramisch aufgebaut sein, wie dieses unter anderem in der DE 698 09 992 T2 offenbart ist. Hierbei kann die Keramik beispielsweise mittels Thermosprühen, Hochgeschwindigkeitsflammsprühen oder Plasmasprühen aufgebracht werden. Einfacher aufzubringen sind allerdings Verbundmaterialien aus Hartstoffpartikeln, z.B. Siliziumcarbidkörner, in einer Kunststoffmatrix, wie diese beispielhaft in der DE 102 47 280 A1, der DE 42 26 789 A1 oder der JP 60-197 770 A beschrieben sind.

Auch sind Verschleißschutzbeschichtungen für Fußböden oder Möbel beispielsweise aus der US 4,920,002 oder der WO 02/45955 A bekannt, wobei auch hier Hartstoffpartikel in einer Kunststoffmatrix eingebettet sind.

Andere Verschleißschutzbeschichtungen sind aus dem Gebiet der Gleitlager beispielsweise in der DE 35 34 242 A1 bekannt, bei denen eine PTFE-Schicht auf eine gesinterte Rauhgrundschicht aufgebracht ist, wobei in die PTFE-Schicht Hartstoffpartikel eingebracht sind.

Es ist Aufgabe vorliegender Erfindung, Verschleißschutzbeschichtung aus Hartstoffpartikeln in einer Kunststoffmatrix haltbarer auszugestalten.

Als Lösung schlägt die Erfindung eine Verschleißschutzbeschichtung aus Hartstoffpartikeln, die eine Mohs-Härte über 4 aufweisen, in einer Kunststoffmatrix mit den Merkmalen der Ansprüche 1 bzw. 3 vor.

Einerseits sind nach Anspruch 1 wenigstens 10 Vol.-% der Hartstoffpartikel Hartstoffkugeln.

Auf diese Weise wird bereits mit einem verhältnismäßig geringem Anteil an Hartstoffkugeln eine Beschichtung bereitgestellt, bei welcher die Hartstoffkugeln rundum in die Kunststoffmatrix gleichmäßiger eingebettet sind, als dieses bei den bekannten Verschleißschutzbeschichtungen der Fall ist, so dass diese Hartstoffkugeln stabiler in der Kunststoffmatrix lagern und die Beschichtung länger hält, auch wenn möglicherweise einige eckige Körner aus der Beschichtung bei längere Benutzung verloren gehen können. Es hat sich jedoch herausgestellt, dass selbst dieser geringe Anteil bereits eine hervorragende Verbesserung der Stamdfestigkeit gewährleistet. Dieses gilt insbesondere auch in Abgrenzung zu den in der DE 102 47 280 A1, in der DE 42 26 789 A1 oder in der JP 60-197 770 A dargestellten Verschleißschutzbeschichtungen, wobei in diesen Druckschriften zwischen Hartstoffkugeln einerseits und Hartstoffpartikeln andererseits nicht differenziert wird.

Hierbei sind Verschleißschutzbeschichtungen insbesondere von Dekorfolien, wie sie beispielsweise in der DE 195 08 797 C1, der DE 100 61 497 B4, der DE 196 04 907 A1, der WO 97/00172 A1, der US 3,928,706 oder der EP 0 519 242 A1 offenbart sind, zu unterscheiden. Während Dekorfolien an sich aus verhältnismäßig dünnflüssigen, abriebfesten Lacken bestehen, die in einer sehr dünnem Lage auf eine Papierbahn aufgebracht werden und gegebenenfalls mit Hartpartikeln durchsetzt sind, so dass die Lacke an sich das Produkt als solches, also die Dekorfolie, darstellen, werden die erfindungsgemäßen Verschleißschutzbeschichtungen nachträglich auf ein Produkt aufgetragen und beeinflussen demnach lediglich die Oberflächeneigenschaften des mit einer entsprechenden Verschleißschutzbeschichtung versehenen Produkts. Hierbei steht bei Dekorfolien insbesondere der durchscheinende Charakter der Dekorfolie im Vordergrund, so dass die Dichte an Hartstoffpartikeln sehr niedrig gewählt wird, zumal die entsprechenden Dekorfolien, anders als die erfindungsgemäßen Verschleißschutzbeschichtungen, in der Regel einer Dauerbelastung nicht unterliegen, sondern lediglich zeitweise, beispielsweise bei einem Stoß oder einem Schritt kurzzeitig belastet werden.

Durch eine Steigerung des Anteils an Hartstoffkugeln lässt sich die Gefahr eines Verlustes an Hartstoffpartikel auf das erforderliche Maß begrenzen, so dass der Anteil an Hartstoffkugeln vorzugsweise 30 Vol.-%, 70 Vol.-% oder sogar 90 Vol.-% betragen kann.

Auch wird insbesondere bei über 10 Vol.-% liegenden Anteilen an Hartstoffkugeln davon ausgegangen, dass bei einem Abrieb der Kunststoffmatrix weniger Hartstoffkanten freigegeben werden, so dass eine Belastung von Materialien, die mit der auf diese Weise beschichteten Oberfläche in Kontakt kommen, auf ein Minimum reduziert werden kann.

In vorliegendem Zusammenhang gilt es zwischen Hartstoffkugeln und anderen Hartstoffkörnern zu unterscheiden. Da es sich auch bei Hartstoffkugeln um industriell in äußert großer Zahl hergestellte Partikel handelt, weisen diese naturgemäß Abweichungen von einer idealen Kugel auf. Derartige Abweichungen können insbesondere auch durch das Herstellungsverfahren intrinsisch den Hartstoffkugeln aufgegeben werden, beispielsweise wenn die Hartstoffkugel durch Erkalten aus einer als Tröpfchen versprühten flüssigen Phase gewonnen werden. Als Herstellungsverfahren kommen insbesondere Sinterverfahren, Sprühverfahren bzw. Anschmelzverfahren zur Anwendung kommen.

Zur Charakterisierung von Hartstoffpartikeln als Hartstoffkugeln kann die Abweichung der Partikeloberfläche zu einer Kugel bzw. zu einem Ellipsoid als Maß dienen. Hierbei wird vorzugsweise in Schnittbildern durch die Hartstoffpartikel gearbeitet, so dass in diesen Schnittbildern die Abweichung der Oberfläche eines Partikels von einem Kreis bzw. einer Ellipse dafür dient, ein Partikel als Kugel zu charakterisieren. Vorzugsweise wird der Kreis bzw. die Elypse aus der Schnittoberfläche des Partikels mittels einer "best fit"-Methode ermittelt. Dieses kann beispielsweise iterativ oder aber auch durch statistische Methoden, wie ein Anfitten eines Kreises bzw. einer Elypse an die Schnittoberfläche des Partikels geschehen. In diesem Zusammenhang werden Ellipsen bzw. Ellipsoide, deren Halbachsen unterhalb eines Längenverhältnisses von eins zu zehn liegen, noch als Kreise bzw. Kugeln im erfindungsgemäßen Sinne angesehen.

Hartstoffpartikel werden dann als Hartstoffkugeln im vorliegenden Sinne bezeichnet, wenn die relative Rauhtiefe unter 0,1 bzw. wenn die Varianz dividiert durch Partikelfläche grö-βer 0,01 ist. Dann sind die Partikel ausreichend rund, um die entsprechenden Vorteile darstellen zu können. Hierbei versteht es sich, dass diese Angaben sich auf die jeweiligen Mittelwerte beziehen, da in einer derartigen Beschichtung eine Vielzahl an Hartstoffpartikeln zu finden ist.

Insbesondere weisen vorzugsweise wenigstens 10 Vol.-% der Hartstofipartikel einen Rundheitsindex größer 0,05, vorzugsweise größer 0,1, insbesondere größer 0,15 auf. Hierbei wird der Rundheitsindex vorzugsweise als Durchmesserunterschied zweier konzentrischer Kreise, zwischen denen die Umfangslinie des jeweiligen Partikels liegt, definiert, wobei es sich versteht, dass auch hier angesichts der Vielzahl an Partikeln in der Beschichtung lediglich Mittelwerte eine Rolle spielen.

Vorzugsweise liegt der Anteil an Hartstoffpartikeln über 15 Vol.-%, 20 Vol.-% oder sogar 30 Vol.-%, wobei es sich versteht, dass über den Rundheitsindex ellipsoide Partikel schwer in ausreichendem Maße erfasst werden können, obgleich mit ihnen die entsprechenden Vorteile verbunden sein können.

Andererseits weisen nach Anspruch 3 wenigsten 10 Vol.-% der Hartstoffpartikel eine Oberflächenrauhigkeit kleiner 15 %, vorzugsweise kleiner 12 %, insbesondere kleiner 10 %, des mittleren Partikeldurchmessers aufweisen.

Auch hierdurch lassen sich die erfindungsgemäßen Vorteile unmittelbar erzielen, wobei der Anteil an entsprechenden Hartstoffpartikeln auch hier vorzugsweise über 30 Vol.-% bzw. 70 Vol.-% oder sogar 90 Vol.-%, liegen kann.

Zur Bestimmung der Rauhigkeit können, ohne dass von vorliegender Erfindung abgewichen wird, verschiedene Meßmethoden dienen. So kann in Annäherung an die gemittelte Rautiefe R_{z} das Schnittbild in 10 Winkelsegmente geteilt und für jedes Segment in einer linearen Mittelung der maximale Abstand zu einer aus der Oberflächenlinie in dem jeweiligen Segment gemittelten Gerade berechnet und aus diesen zehn Werten der Mittelwert gebildet werden. Anstelle dieser Rauhigkeit R_{zk} kann jedoch die Rauhigkeit insbesondere auch in Bezug auf den Flächenschwerpunkt des jeweiligen Partikels in der Schnittansicht in Anlehnung an die mittlere Rauhigkeit Rₐ ermittelt werden.

Andererseits wird als Lösung eine Verschleißschutzbeschichtung aus Hartstoffpartikeln in einer Kunststoffmatrix vorgeschlagen, welche sich dadurch auszeichnet, dass Anteil der Hartstoffpartikel in der Kunststoffmatrix über 40 Gew.-% beträgt.

Je nach konkreter Ausgestaltung kann der Hartstoffpartikelanteil über 45 Gew.-% bzw. über 50 Gew.-% betragen, wodurch die Verschleißschutzbeschichtung überraschender Weise noch haltbarer ausgestaltet werden kann, obgleich der Anteil an Kunststoffmatrix, die an sich dem Verbund seine Haltbarkeit verleiht, geringer wird. Aus diesem Grunde kann es insbesondere von Vorteil sein, wenn der Anteil der Hartstoffpartikel in der Kunststoffmatrix unter 95 Gew.-%, vorzugsweise unter 90 Gew.-%, beträgt.

Auch kann bei einer Verschleißschutzbeschichtung aus Hartstoffpartikeln in einer Kunststoffmatrix der Anteil der Hartstoffpartikel in der Kunststoffmatrix über 15 Vol.-%, vorzugsweise über 20 Vol.-% bzw. über 25 Vol.-% betragen. Dementsprechend ist es in einer besonderen Ausgestaltung dann von Vorteil, wenn der Anteil der Hartstoffpartikel in der Kunststoffmatrix unter 80 Vol.-%, vorzugsweise unter 70 Vol.-%, beträgt.

Hierbei hat es sich überraschender Weise herausgestellt, dass insbesondere im Zusammenspiel mit Hartstoffkugeln derartig hohe Partikeldichten erreicht werden können. Dieses gilt insbesondere auch wenn verhältnismäßig schlecht fließfähige Ausgangsmaterialien für die Kunststoffmatrix verwendet werden, die durch das Vorhandensein einer Vielzahl von Hartstoffkörnern nach dem Stand der Technik nicht mehr zu einer Verscheißschutzbeschichtung aufgetragen werden können.

Hierbei kann insbesondere die Schüttdichtezahl der Hartstoffpartikel über 0,54, vorzugsweise über 0,55 bzw. 0,56 oder größer, betragen. Derartige Schüttdichtezahlen stellen ein Maß für die Fähigkeit der Hartstoffpartikel dar, sich gegenseitig in einem Fließvorgang nicht zu behindern und somit äußerst hohe Hartstoffpartikelkonzentrationen zu ermöglich, ohne eine Streichfähigkeit der Kunststoffmatrix zu sehr zu vermindern. Hierbei kann die Schüttdichtzahl einerseits aus den Ausgangsstoffen ermittelt werden, die entsprechend in ihrer Schüttdichte gemessen und dann auf die Dichte der Hartstoffpartikel normiert werden. Ebenso können auch die Hartstoffpartikel nachträglich aus der Beschichtung herausgelöst, gereinigt, entsprechend getrocknet und anschließend dergestalt vermessen werden. Im übrigen versteht es sich, dass eine derartige Schüttdichtezahl auch unabhängig von den übrigen Vorteilen vorliegender Erfindung für eine Verschleißschutzbeschichtung aus Hartstoffpartikeln in einer Kunststoffmatrix vorteilhaft ist.

Vorzugsweise beträgt der Staubanteil an Hartstoffpartikeln und 10 Gew.-% der Hartstoffpartikel, wobei der Staubanteil in vorliegendem Zusammenhang als der Anteil an Partikeln mit einem Durchmesser kleiner 0,1 µm definiert ist. Durch natürlichen Abrieb während der Fertigung sowie durch andere Umstände lässt sich der Staubanteil nahezu ausgeschlossen auf Null reduzieren, was jedoch an sich entsprechend am vorteilhaftesten zu einer dauerfesten Verschleißschutzbeschichtung führen würde, insbesondere da der Staubanteil nur sehr wenig zur Erhöhung der Beständigkeit beiträgt.

Auch ist es entsprechend vorteilhaft, wenn wenigstens 10 Gew.-% der Hartstoffpartikel einen Durchmesser größer 1 µm aufweisen. Auch eine derartige Maßnahme trägt zu einer Erhöhung der Gesamtstabilität der Verschleißschutzbeschichtung bei.

Vorzugsweise variiert der Volumenanteil der Hartstoffpartikel senkrecht zur Oberfläche der Verschleißschutzbeschichtung weniger als 20 %, insbesondere um weniger als 10 %. Hierdurch kann die Verschleißschutzbeschichtung bei Verschleiß mehrmals abgeschliffen werden, bevor sie letztlich erneuert werden muss, ohne dass sich die Eigenschaften der Oberfläche erheblich ändern, da die Verschleißschutzbeschichtung in ihrer Tiefe dann äußerst homogen aufgebaut ist. Insbesondere kann ein derartiges Nachschleifen wesentlich kostengünstiger und schneller durchgeführt werden als das Aufbringen einer neuen Beschichtung.

Dementsprechend ist es kumulativ bzw. alternativ von Vorteil, wenn die Stärke der Schicht zumindest viermal so groß ist, wie der mittlere Korndurchmesser der Hartstoffpartikel. Auch hierdurch kann ein mehrmaliges Nachschleifen ermöglicht werden.

Vorliegende Erfindung ist insbesondere für Verschleißschutzbeschichtungen mit einer Schichtdicke von über 0,8 mm, vorzugsweise von über 1,0 mm oder sogar von über 1,2 mm, geeignet. Dementsprechend eignen sich derartige erfindungsgemäße Verschleißschutzbeschichtungen insbesondere auch für verhältnismäßig große Objekte, wie beispielsweise Walzen bei der Papierherstellung oder sonstige Großwalzen, mit zu beschichtenden Oberflichen von mehr als 1 m². Es ist unmittelbar ersichtlich, dass bei der Beschichtung von Walzen, die 4 m oder mehr lang sind, und Durchmesser von über 30 cm aufweisen, Fertigungstechniken und Materialqualitäten aus der Feinmechanik, wie sie beispielsweise bei Drucker- oder Kopiererwalzen zu finden sind, nicht zur Anwendung kommen können. Die außerordentliche Stabilität der erfindungsgemäßen Verschleißschutzbeschichtungen ermöglicht erst deren Einsatz im Maschinenbau, insbesondere auch im schweren Maschinen- und Anlagenbau.

Es versteht sich, dass der homogene Aufbau sowie die Stärke der Verschleißschutzbeschichtung auch unabhängig von den übrigen Merkmalen vorliegender Erfindung bei einer Verschleißschutzbeschichtung aus Hartstoffpartikeln in einer Kunststoffmatrix die Möglichkeit eines mehrmaligen Nachschleifens eröffnet.

Hierbei ist insbesondere zu betonen, dass die erfindungsgemäße Verschleißschutzbeschichtung insbesondere in Abweichung von der DE 103 01 135 A1, der DE 35 03 859 C2, der US 5,389,229, der US 5,674,631 und de US 3,617,363 eine metallische Matrix nicht aufweist, sondern Kunststoff als Matrix nutzt, in welche dann Hartstoffe, die ggf. auch metallische Anteile aufweisen können, eingelagert sind. Insbesondere können ggf. auch weitere Materialien, wie beispielsweise Gleit- oder Antihaftmaterialien, z.B. Polytetrafluorethylen, in die Matrix eingelagert werden.

Vorzugsweise weisen die Hartstoffpartikel eine Siebung kleiner 600 µm mit einer im Wesentlichen Gaußschen Verteilung auf. Hierdurch kann eine gute Mischung aus Kunststoffmatrix und Hartstoffpartikel gewährleistet werden, welche ausreichend viele Hartstoffpartikel ausreichend elastisch in der Kunststoffmatrix lagert. Hierbei liegt streng genommen keine Gaußsche Verteilung vor, da diese durch die Festlegung einer Siebung nach oben hin abgeschnitten wird. Auch ist es vorteilhaft, bimodale bzw. höher modale Verteilungen vorzusehen, da hierdurch höhere Packungsdichten erzielt werden können. So können beispielsweise 5 µm und 50 µm Partikel jeweils in einer bestimmten, vorzugsweise in einer Gaußschen, Verteilung gemischt werden, so dass sich eine komplexe Gesamtverteilung ergibt.

Vorzugsweise liegt die Siebung unter 150 µm, wobei insbesondere hierdurch eine verhältnismäßig gutmütige Beschichtung realisiert werden kann, die, insbesondere auch nach einem Abschleifen, eine sehr geringe Rauhigkeit aufweist, wobei die Vermutung besteht, dass durch eine derartige Siebung die Hartstoffpartikel die Matrix besser vor korrodierenden bzw. abrasiven Angriffen schützen können. Hierbei hat sich herausgestellt, dass bei weniger runden Hartstoffpartikeln niedrigere Siebungen, beispielsweise auch unter 125 µm vorteilhaft sind.

Der Hartstoffpartikel weisen demnach vorzugsweise einen mittleren Partikeldurchmesser kleiner 500 µm, vorzugsweise kleiner 120 µm bzw. kleiner 100 µm oder sogar kleiner 90 µm bzw. 80 µm auf, so dass eine feine Verteilung der Hartstoffpartikel gewährleistet werden kann. Insbesondere mit einem Anteil von über 40 oder mehr Gew.-% bzw. über 15 oder mehr Vol.-% kann auf diese Weise eine Beschichtung mit völlig neuen, insbesondere sehr verschleißarmen und Material schonenden Eigenschaften bereitgestellt werden. In ausreichender Stärke bereitgestellt, kann diese Beschichtung auch ohne weiteres mehrfach nachgeschliffen werden, ohne ihre Eigenschaften erheblich zu verändern.

In konkreten Ausführungsformen haben sich Verschleißschutzbeschichtung mit einer Siebung von 25 µm bei Hartstoffpartikeln mit Spitzen bzw. von 23 µm bei Hartstoffkugeln als verhältnismäßig gutmütig hinsichtlich einer auf diesen laufenden Bahn, beispielsweise aus Papier, und dennoch äußerst verschleißarm erwiesen.

Die Hartstoffpartikel können insbesondere Hartmetallpartikel bzw. -kugeln oder Stahlpartikel bzw. -kugeln umfassen. Während Stahlpartikel sich sehr gut als Kugeln in nahezu jeder Größenverteilung herstellen lassen, ergeben sich die vorstehend beschriebenen Vorteile insbesondere. Aber auch bei Hartmetallpartikeln, die in der Regel sehr scharfe Kanten haben kann die Verschleißschutzbeschichtung durch die vorstehend beschrieben Erfindung überraschend stabil ausgeführt werden, wenn wenigstens einige der Partikel derartige scharfe Kanten nicht aufweisen.

Vorzugsweise weisen die Hartstoffpartikel eine Mohs-Härte über 4, vorzugsweise über 5, auf. Derartige harte Hartstoffpartikel führen insbesondere zu einer hervorragenden Stabilisierung der Kunststoffmatrix. Auch kann bei einer derartigen Ausgestaltung die Kunststoffmatrix verhältnismäßig hart ausgebildet werden, ohne dass die Vorteile einer wesentlich höheren Elastizität der Kunststoffmatrix gegenüber den Hartstoffpartikeln verloren geht.

Andererseits können auch weichere Hartstoffpartikel zur Anwendung kommen, insbesondere wenn auch die Kunstmatrix an sich weicher gewählt wird. So kann es von Vorteil sein, wenn die Kunststoffmatrix eine Shore D Härte unter 80 aufweist. Bei einer derartigen Ausgestaltung sollten dann die Hartstoffpartikel eine Shore D Härte, die über der Shore D Härte der Kunststoffmatrix liegt, aufweisen, so dass diese die Verschleißschutzbeschichtung ausreichend stabilsieren.

Hierbei ist insbesondere zu berücksichtigen, dass Partikel bzw. Oberflächen in der Regel lediglich entweder einer Härtemessung nach Mohs oder einer Härtemessung nach Shore zugänglich sind. Bei verhältnismäßig sehr harten Partikeln liefert eine Messung nach Shore keine aussagekräftigen Ergebnisse mehr. Sind die Partikel nicht ganz sehr hart, so kann über eine Messung nach Mohs keine Differenzierung mehr getroffen werden, so dass dann Messungen nach Shore vorgenommen werden müssen.

Auch ist vorliegende Erfindung von Verschleißschutzbeschichtungen zu unterscheiden, bei welchen Feststoffe chemisch in eine Matrix eingebunden sind, wie diese beispielsweise in der DE 37 25 742 A1 anhand von Hartgummipartikeln, die in einer Gummimatrix eingelagert sind, offenbart ist. Insofern ist es vorteilhaft, wenn die Kunststoffmatrix wenigstens einen, vorzugsweise zwei, Härtegrade nach Mohs bzw. wenigstens 10, vorzugsweise 20, Härtegrade nach Shore D unter denen der Hartstoffpartikel liegt, so dass die Vorteile der Eigenelastizität der Kunststoffmatrix einerseits und der stabilisierenden Wirkung der Hartstoffpartikel andererseits kumulierend umgesetzt werden können.

Vorzugsweise kommt als Kunststoffmatrix eine duroplastische Kunststoffmatrix zum Einsatz. Im vorliegenden Zusammenhang bezeichnet der Begriff "duroplastische Kunststoffmatrix" eine Kunststoffmatrix, welche lediglich durch Zerstörung wieder verflüssigt bzw. entfernt werden kann. Hiervon sind insbesondere zu unterscheiden Plastomeren bzw. Thermoplasten. Hierbei kann die Kunststoffmatrix beispielsweise Polyurethane, Polyharnstoffe und/oder Epoxyde bzw. vernetzte technische Gummis umfassen.

In der Zeichnung zeigen
- Figur 1: eine erfindungsgemäße Verschleißschutzbeschichtung im Schnitt;
- Figur 2: graphische Bearbeitungen zweier Hartstoffpartikel aus Figur 2;
- Figuren 3 bis 5: weitere erfindungsgemäße Verschleißschutzbeschichtung; und

Figur 6 eine Verschleißschutzbeschichtung nach dem Stand der Technik.

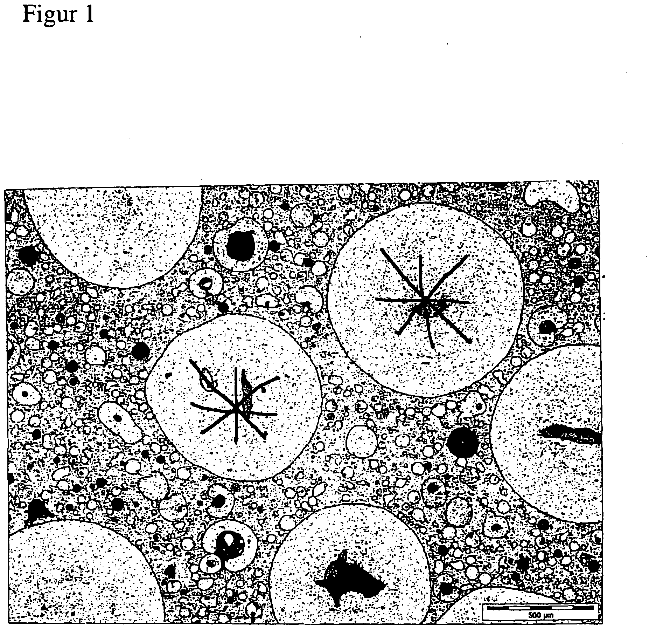

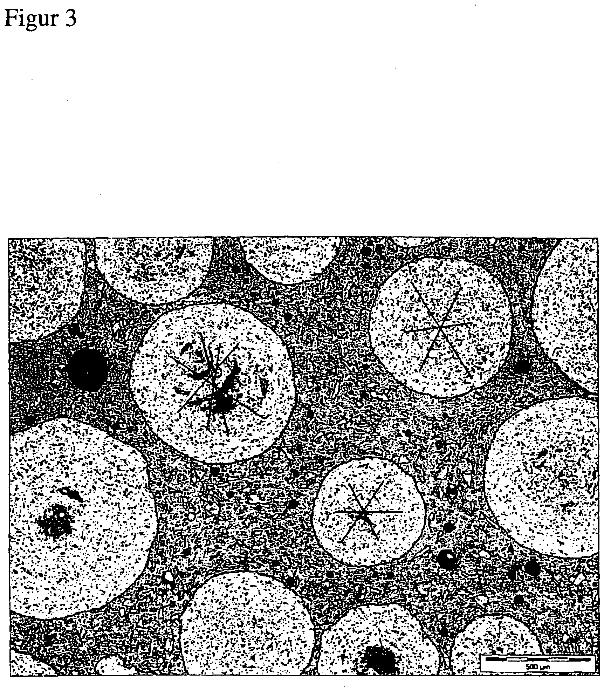

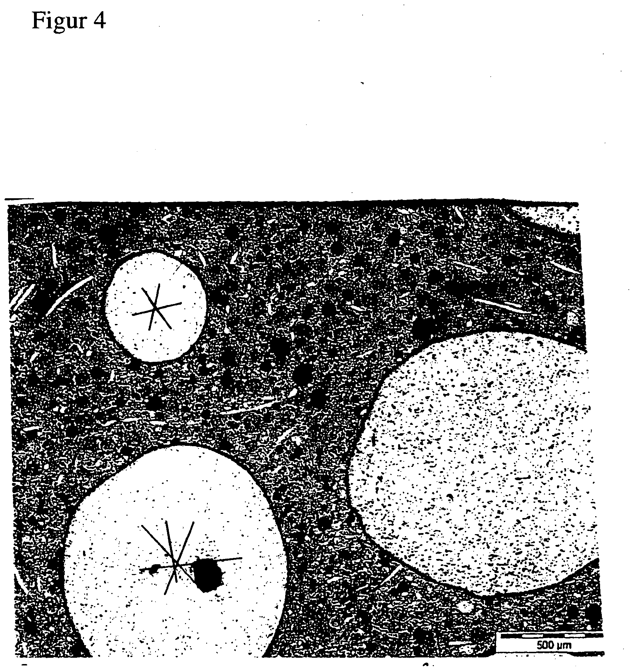

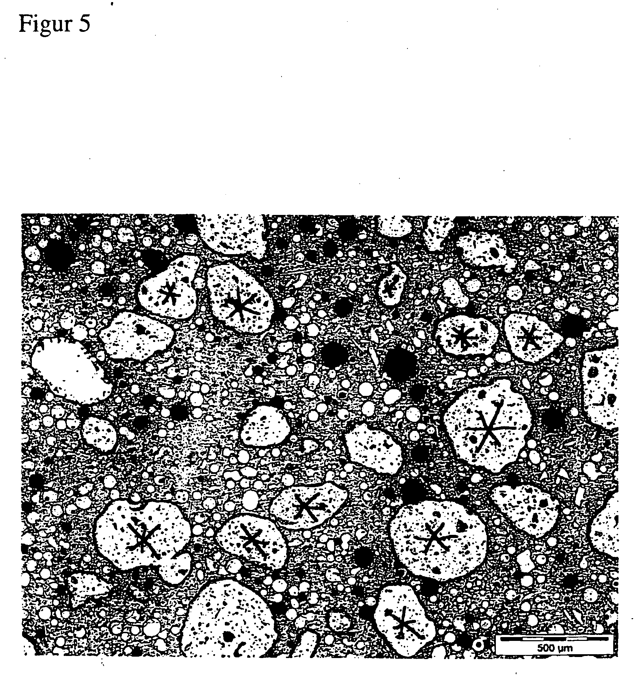

Wie unmittelbar aus einem Vergleich der Figuren 1 und 3 bis 6 ersichtlich, in den jeweils Verschleißschutzbeschichtungen aus Hartstoffpartikeln in einer Kunststoffmatrix in mikroskopischen Schnittbildern dargestellt sind, weisen die erfindungsgemäßen, in Figuren 1 und 3 bis 5 dargestellten Verschleißschutzbeschichtung wesentlich rundere Hartstoffpartikel auf, als die Verschleißschutzbeschichtung nach dem Stand der Technik.

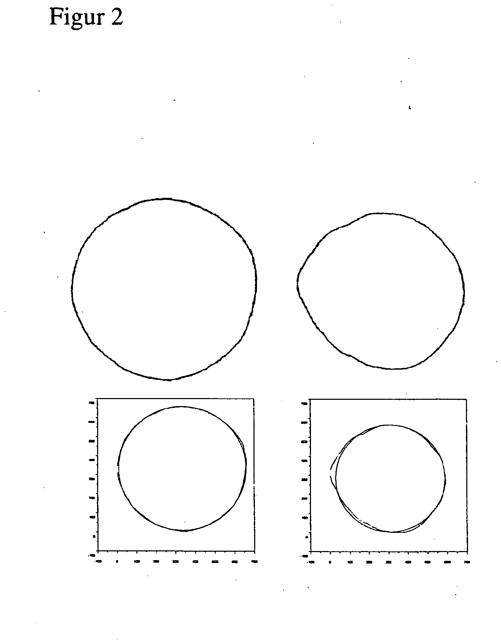

Hierbei kann ein Großteil der Hartstoffpartikel angesichts dieser Rundheit dementsprechend als Hartstoffkugeln bezeichnet werden. Um entsprechend der hier vorgegebenen Definition, dass Hartstoffpartikel dann als Hartstoffkugeln im vorliegenden Sinne bezeichnet werden, wenn die relative Rauhtiefe der Oberfläche unter 0,1 bzw. wenn die Varianz der Oberfläche dividiert durch Partikelfläche größer 0,01 ist, eine Unterscheidung treffen zu können, werden bei diesem Messbeispiel die Hartstoffpartikel zunächst graphisch erfasst, wie anhand des Ausführungsbeispiels nach Figur 1 im oberen Bereich der Figur 2 für die in Figur 2 mit einem Kreuz markierten Hartstoffpartikel geschehen. An die graphische Erfassung wird dann ein bestmöglicher Kreis angepasst, wie im unteren Bereich der Figur 2 dargestellt.

Bei vorliegendem Messbeispiel der Figuren 1 und 2 wurde der Kreis jeweils iterativ ermittelt, indem die größtmögliche Überlappung von Partikel und Kreis als Iterationskriterium gewählt wurde. Alternativ können aus der graphischen Darstellung auch Punkte gewonnen und aus diesen Punkten ein Kreis oder auch eine Ellipse best möglich passend errechnet werden.

Anschließend erfolgt eine statistische Auswertung nach folgenden Kriterien

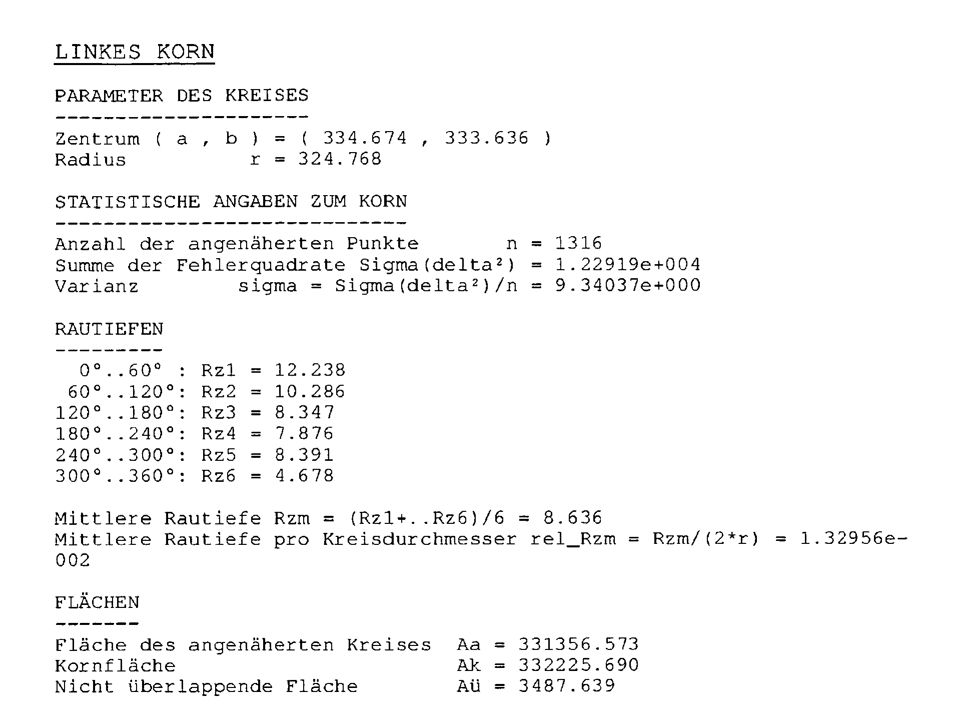

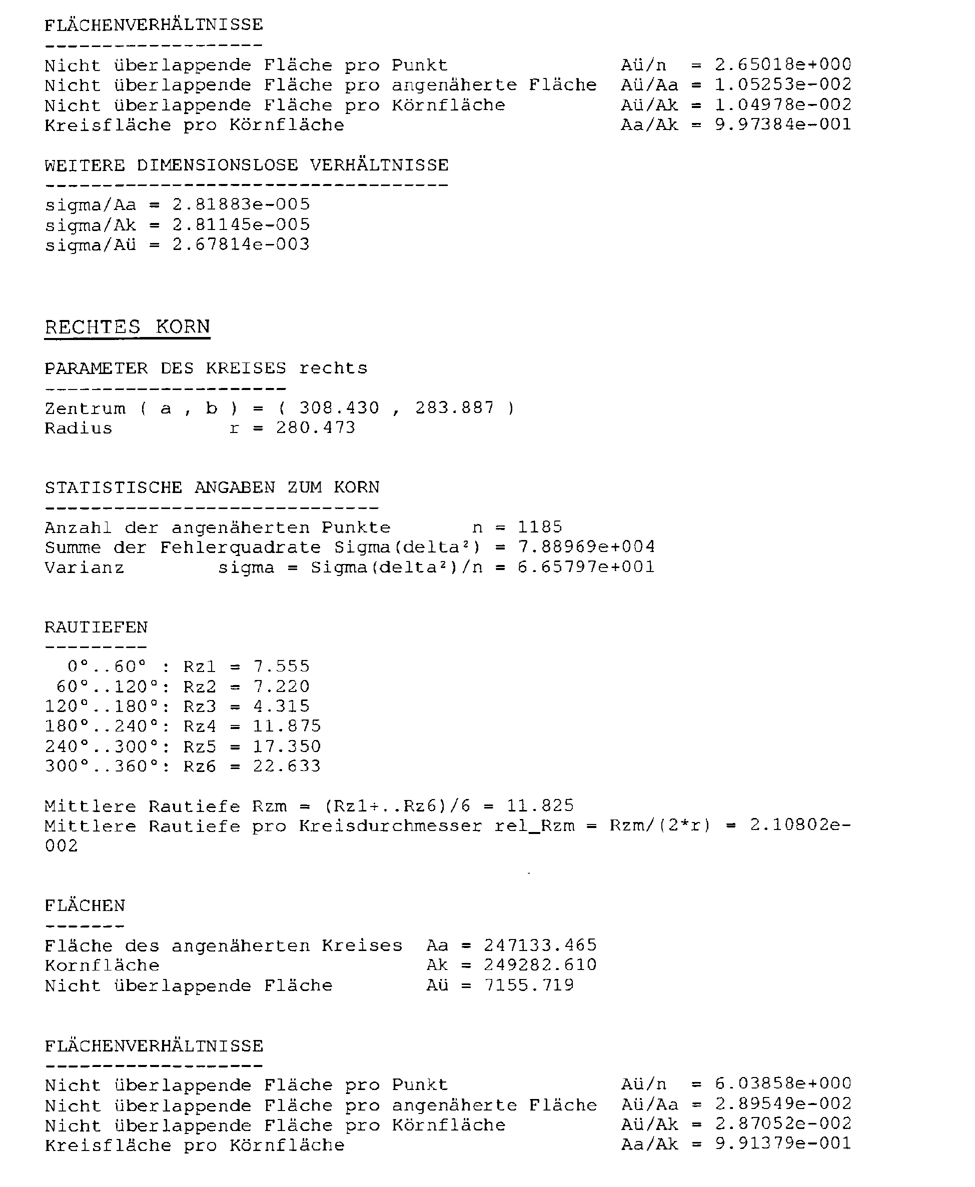

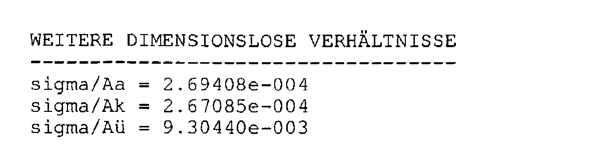

Hierbei stellt sigma die Varianz, Rzm die mittlere Rauhtiefe, die bei diesem Messbeispiel aus sechs Einzelwerten gewonnen wird, rel_Tzm die auf den Kreisdurchmesser genormte Rauhtiefe, Aa die Fläche des angenäherten Kreises, Ak die Kornfläche und Aü die Fläche, die nicht sowohl im angenäherten Kreis als auch im Korn liegt, dar. Es versteht sich, dass für eine genauere Berechung auch eine Annäherung an eine Elypse gewählt werden kann. Statt dieser iterativen Annäherung kann auch eine statistische Auswertung erfolgen.

Identische Messungen wurden für die übrigen, in den Figuren markierten Hartstoffpartikel durchgeführt und in nachfolgender Tabelle zusammengestellt.

| Fig. 1 | sigma | Rzm | rel_Rzm | Aü/Aa | Aü/Ak | Aa/Ak | sigma/Aa | sigma/Ak | sigma/Aü |
|---|---|---|---|---|---|---|---|---|---|
| Links | 66,5797 | 11,8250 | 0,0211 | 0,0290 | 0,0287 | 0,9914 | 0,0003 | 0,0003 | 0,0093 |
| Rechts | 9,3404 | 8,6360 | 0,0133 | 0,0105 | 0,0105 | 0,9974 | 0,0000 | 0,0000 | 0,0027 |
| Mittel | 37,9600 | 10,2305 | 0,0172 | 0,0197 | 0,0196 | 0,9944 | 0,0001 | 0,0001 | 0,0060 |
| Fig. 3 | | | | | | | | | |
| | 66,2351 | 10,3140 | 0,0190 | 0,0315 | 0,0314 | 0,9983 | 0,0003 | 0,0003 | 0,0090 |
| | 14,9793 | 8,1020 | 0,0216 | 0,0333 | 0,0332 | 0,9967 | 0,0001 | 0,0001 | 0,0041 |
| Mittel | 40,6072 | 9,2080 | 0,0203 | 0,0324 | 0,0323 | 0,9975 | 0,0002 | 0,0002 | 0,0066 |
| Figur 4 | | | | | | | | | |
| | 190,7000 | 17,7320 | 0,0247 | 0,0983 | 0,1073 | 1,0921 | 0,0005 | 0,0005 | 0,0048 |
| Figur 5 | | | | | | | | | |
| | 239,9490 | 16,1360 | 0,0725 | 0,2493 | 0,2573 | 1,0323 | 0,0062 | 0,0064 | 0,0247 |
| | 112,9960 | 13,0480 | 0,1102 | 0,2924 | 0,3291 | 1,1253 | 0,0103 | 0,0116 | 0,0351 |
| | 146,5050 | 13,7040 | 0,0819 | 0,2900 | 0,2691 | 0,9280 | 0,0067 | 0,0062 | 0,0230 |
| | 111,6460 | 16,9340 | 0,0999 | 0,2118 | 0,2128 | 1,0047 | 0,0049 | 0,0050 | 0,0233 |
| | 73,2181 | 12,9420 | 0,0451 | 0,0879 | 0,0889 | 1,0116 | 0,0011 | 0,0011 | 0,0129 |
| | 105,4980 | 14,5100 | 0,0500 | 0,1304 | 0,1248 | 0,9575 | 0,0016 | 0,0015 | 0,0122 |
| | 183,4440 | 16,2960 | 0,0753 | 0,2226 | 0,2360 | 1,0601 | 0,0050 | 0,0053 | 0,0224 |
| | 370,1570 | 23,4060 | 0,1250 | 0,3674 | 0,3587 | 0,9762 | 0,0134 | 0,0131 | 0,0366 |
| | 283,3440 | 10,8740 | 0,0567 | 0,3146 | 0,3047 | 0,9684 | 0,0098 | 0,0095 | 0,0312 |
| Mittel | 180,7508 | 15,3167 | 0,0796 | 0,2407 | 0,2424 | 1,0071 | 0,0066 | 0,0066 | 0,0246 |
| Figur 6 | | | | | | | | | |
| | 32,0876 | 11,4970 | 0,0792 | 0,1334 | 0,1346 | 1,0090 | 0,0019 | 0,0020 | 0,0145 |
| | 301,9000 | 13,7530 | 0,0991 | 0,4619 | 0,4359 | 0,9436 | 0,0200 | 0,0188 | 0,0432 |
| | 1488,580 | | | 0,9225 | 1,9697 | 2,1350 | 0,0800 | 0,1709 | 0,0868 |
| | 132,9680 | 19,0910 | 0,0837 | 0,1481 | 0,1514 | 1,0223 | 0,0033 | 0,0033 | 0,0220 |
| | 461,8500 | 18,3550 | 0,1061 | 0,4131 | 0,4233 | 1,0247 | 0,0197 | 0,0201 | 0,0476 |
| | 3358,170 | 34,3190 | 0,1236 | 0,7244 | 1,3333 | 1,8405 | 0,0555 | 0,1021 | 0,0766 |
| | 374,0970 | 25,2000 | 0,1467 | 0,3827 | 0,3911 | 1,0220 | 0,0162 | 0,0165 | 0,0422 |
| Mittel | 878,5218 | 20,3692 | 0,1064 | 0,4552 | 0,6913 | 1,2853 | 0,0281 | 0,0477 | 0,0476 |

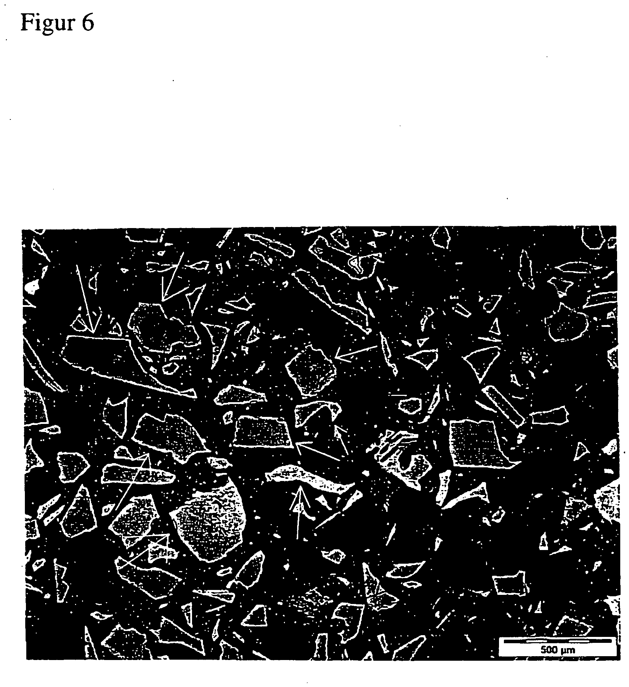

Für die erfindungsgemäße Charakterisierung als Kugel werden dementsprechend die Spalten der relativen Rauhtiefe rel_Rzm bzw. Varianz durch Partikelfläche sigma/Ak untersucht, so dass deutlich wird, dass es sich bei den Partikeln in Figur 6 gerade um Kugeln nicht handelt.

Entsprechend der hier gegebenen Definition für Hartstoffkugeln ist unmittelbar ersichtlich, dass die in Figur 6 dargestellten Hartstoffpartikel keine Kugeln sind.

In einem Vergleich wurden runde, kubische und mit Spitzen versehene Hartstoffpartikel in ihrer Schüttdichte untersucht.

| | Schüttdichte kg/l | Spez. Dichte kg/l | Schüttdichtezahl |
|---|---|---|---|
| rund | 2,48 | 3,80 | 0,65 |
| kubisch | 2,24 | 3,95 | 0,57 |
| spitz | 2,04 | 3,95 | 0,52 |
| Mischung 80/20 | 2,36 | 3,83 | 0,62 |
| Mischung 80/20 | 2,18 | 3,92 | 0,56 |

Hierbei besteht die Mischung 80/20 zu 80% aus runden Hartstoffpartikeln, während die Mischung 20/80 20% runde Hartstoffpartikel aufweist und die restlichen Anteile durch die mit Spitzen versehenen Hartstoffpartikel gebildet wurden. Hierbei hat sich herausgestellt, dass bereits geringe Anteile an runden Hartstoffpartikeln die reologischen Eigenschaften der Gesamtmischung aus noch streichfähiger Kunststoffmatrix und Hartstoffpartikeln äußerst günstig beeinflussen, so dass insbesondere sehr hohe Dichten an Hartstoffpartikeln erreicht werden können.

Die gemessenen Schüttdichten wurden zur Bestimmung der jeweiligen Schüttdichtezahl durch die spezifische Dichte normiert.

## Patentansprüche

1. Verschleißschutzbeschichtung aus Hartstoffpartikeln in einer Kunststoffmatrix, die eine Mohs-Härte über 4 aufweisen, **dadurch gekennzeichnet, dass** wenigstens 10 Vol.-% der Hartstoffpartikel Hartstoffkugeln mit einem Rundheitsindex größer 0,05 sind, wobei der Anteil der Hartstoffpartikel in der Kunststoffmatrix über 15 Vol.-% beträgt.

2. Verschleißschutzbeschichtung nach Anspruch 1, **dadurch gekennzeichnet, dass** die Hartstoffkugeln durch Sintern, ein Sprühverfahren und/oder durch Anschmelzen von Hartstoffkörnem gewonnen wurden.

3. Verschleißschutzbeschichtung aus Hartstoffpartikeln in einer Kunststoffmatrix, die eine Mohs-Härte über 4 aufweisen, **dadurch gekennzeichnet, dass** wenigsten 10 Vol.-% der Hartstoffpartikel eine Oberflächenrauhigkeit kleiner 15% des mittleren Partikeldurchmessers aufweisen, wobei der Anteil der Hartstoffpartikel in der Kunststoffmatrix über 15 Vol.-% beträgt.

4. Verschleißschutzbeschichtung nach einem der vorstehenden Ansprüche, **dadurch gekennzeichnet, dass** der Anteil der Hartstoffpartikel in der Kunststoffmatrix über 40 Gew.-% beträgt.

5. Verschleißschutzbeschichtung nach Anspruch 4, **dadurch gekennzeichnet, dass** der Anteil der Hartstoffpartikel in der Kunststoffmatrix unter 95 Gew.-% beträgt.

6. Verschleißschutzbeschichtung nach einem der vorstehenden Ansprüche, **dadurch gekennzeichnet, dass** der Anteil der Hartstoffpartikel in der Kunststoffmatrix unter 80 Gew.-% beträgt.

7. Verschleißschutzbeschichtung nach einem der vorstehenden Ansprüche, **dadurch gekennzeichnet, dass** die Schüttdichtezahl der Hartstoffpartikel größer als 0,54 beträgt.

8. Verschleißschutzbeschichtung nach einem der vorstehenden Ansprüche, **dadurch gekennzeichnet, dass** ein Staubanteil an Hartstoffpartikeln unter 10 Gew.-% der Hartstoffpartikel beträgt.

9. Verschleißschutzbeschichtung nach einem der vorstehenden Ansprüche, **dadurch gekennzeichnet, dass** mindestens 10 Gew.-% der Hartstoffpartikel einen Durchmesser größer 1 µm aufweisen.

10. Verschleißschutzbeschichtung nach einem der vorstehenden Ansprüche, **dadurch gekennzeichnet, dass** der Volumenanteil der Hartstoffpartikel senkrecht zur Oberfläche der Verschleißschutzbeschichtung weniger als 20 %, vorzugsweise weniger als 10 %, variiert.

11. Verschleißschutzbeschichtung nach einem der vorstehenden Ansprüche, **dadurch gekennzeichnet, dass** die Stärke der Schicht zumindest viermal so groß ist, wie der mittlere Korndurchmesser der Hartstoffpartikel.

12. Verschleißschutzbeschichtung nach einem der vorstehenden Ansprüche, **dadurch gekennzeichnet, dass** die Hartstoffpartikel eine Siebung kleiner 600 µm mit einer im Wesentlichen Gaußschen Verteilung aufweisen.

13. Verschleißschutzbeschichtung nach einem der vorstehenden Ansprüche, **gekennzeichnet durch** einen mittleren Partikeldurchmesser der Hartstoffpartikel kleiner 500 µm.

## Claims

1. A wear protection coating made from carbide particles in a plastic matrix which have a Mohs hardness greater than 4, **characterised in that** at least 10% by volume of the carbide particles are carbide balls with a roundness index greater than 0.05, wherein the proportion of carbide particles in the plastic matrix is greater than 15% by volume.

2. The wear protection coating according to Claim 1, **characterised in that** the carbide balls were obtained by sintering, a spraying process and/or by fusing on carbide grains.

3. A wear protection coating made from carbide particles in a plastic matrix which have a Mohs hardness greater than 4, **characterised in that** at least 10% by volume of the carbide particles have a surface roughness smaller than 15% of the average particle diameter, wherein the proportion of the carbide particles in the plastic matrix is greater than 15% by volume.

4. The wear protection coating according to one of the preceding claims, **characterised in that** the proportion of the carbide particles in the plastic matrix is greater than 40% by weight.

5. The wear protection coating according to Claim 4, **characterised in that** the proportion of the carbide particles in the plastic matrix is smaller than 95% by weight.

6. The wear protection coating according to one of the preceding claims, **characterised in that** the proportion of the carbide particles in the plastic matrix is smaller than 80% by weight.

7. The wear protection coating according to one of the preceding claims, **characterised in that** the bulk density number of the carbide particles is greater than 0.54.

8. The wear protection coating according to one of the preceding claims, **characterised in that** a dust portion of carbide particles is smaller than 10% by weight of the carbide particles.

9. The wear protection coating according to one of the preceding claims, **characterised in that** at least 10% by weight of the carbide particles have a diameter larger than 1 µm.

10. The wear protection coating according to one of the preceding claims, **characterised in that** the volume fraction of the carbide particles perpendicular to the surface of the wear protection coating varies by less than 20%, preferably less than 10%.

11. The wear protection coating according to one of the preceding claims, **characterised in that** the thickness of the layer is at least four times as large as the average grain diameter of the carbide particles.

12. The wear protection coating according to one of the preceding claims, **characterised in that** the carbide particles have a sieving smaller than 600 µm with an essentially Gaussian distribution.

13. The wear protection coating according to one of the preceding claims, **characterised by** an average particle diameter of the carbide particles smaller than 500 µm.

## Revendications

1. Revêtement anti-usure en particules de matière dure dans une matrice en matière plastique qui présentent une dureté de Mhos supérieure à 4, **caractérisé en ce qu'**au moins 10 % en volume des particules de matière dure sont des billes en matière dure avec un indice de rotondité supérieur à 0.05, la part en particules de matière dure dans la matrice en matière plastique étant supérieure à 15 % en volume.

2. Revêtement anti-usure selon la revendication 1, **caractérisé en ce que** les billes en matière dure ont été obtenues par frittage, par un procédé de vaporisation et/ou par fonte de grains de matière dure.

3. Revêtement anti-usure en particules de matière dure dans une matrice en matière plastique qui présentent une dureté de Mhos supérieure à 4, **caractérisé en ce qu'**au moins 10 % en volume des particules de matière dure présentent une rugosité de surface inférieure à 15 % du diamètre moyen des particules, la part en particules de matière dure dans la matrice en matière plastique étant supérieure à 15 % en volume.

4. Revêtement anti-usure selon l'une quelconque des revendications précédentes, **caractérisé en ce que** la part en particules de matière dure dans la matrice en matière plastique est supérieure à 40 % en poids.

5. Revêtement anti-usure selon la revendication 4, **caractérisé en ce que** la part de particules de matière dure dans la matrice en matière plastique est inférieure à 95 % en poids.

6. Revêtement anti-usure selon l'une quelconque des revendications précédentes, **caractérisé en ce que** la part de particules de matière dure dans la matrice en matière plastique est inférieure à 80 % en poids.

7. Revêtement anti-usure selon l'une quelconque des revendications précédentes, **caractérisé en ce que** l'indice de densité apparente des particules de matière dure est supérieure à 0,54.

8. Revêtement anti-usure selon l'une quelconque des revendications précédentes, **caractérisé en ce qu'**une part de poussière de particules de matière dure est inférieure à 10 % en poids des particules de matière dure.

9. Revêtement anti-usure selon l'une quelconque des revendications précédentes, **caractérisé en ce qu'**au moins 10 % en poids des particules de matière dure ont un diamètre supérieur à 1 µm.

10. Revêtement anti-usure selon l'une quelconque des revendications précédentes, **caractérisé en ce que** la part en volume des particules de matière dure à la perpendiculaire de la surface du revêtement anti-usure varie à moins de 20 %, de préférence à moins de 10 %.

11. Revêtement anti-usure selon l'une quelconque des revendications précédentes, **caractérisé en ce que** l'épaisseur de la couche correspond au moins au quadruple du diamètre moyen des grains de particules de matière dure.

12. Revêtement anti-usure selon l'une quelconque des revendications précédentes, **caractérisé en ce que** les particules de matière dure présentent un criblage inférieur à 600 µm, avec une répartition sensiblement gaussienne.

13. Revêtement anti-usure selon l'une quelconque des revendications précédentes, **caractérisé par** un diamètre moyen des particules de matière dure inférieur à 500 µm.
